# EUROPEAN PATENT SPECIFICATION

(11) **EP 3 322 080 B1**
(45) Date of publication and mention of the grant of the patent: **08.01.2020**
(21) Application number: 17200942.5
(22) Date of filing: 09.11.2017
(51) Int. Cl.: H02M 5/293, H05B 39/04, H02M 7/217, H05B 37/02, H02M 1/00, H02M 1/10

(54) **PRE-REGULATOR FOR DETECTING CONNECTION STATE DIMMER**
VORREGLER ZUR ERKENNUNG EINES VERBINDUNGSZUSTANDSDIMMERS
PRÉRÉGULATEUR POUR LA DÉTECTION D'UN VARIATEUR D'ÉTAT DE CONNEXION

(30) Priority: 09.11.2016 BE 201605842
(43) Date of publication of application: 16.05.2018
(73) Proprietor: Niko NV, 9100 Sint-Niklaas (BE)
(72) Inventor: DE BRABANDER, Peter, 9100 Nieuwkerken-Waas (BE)
(74) Representative: DenK iP

(56) References cited:
- US-A- 5 736 795
- US-A1- 2008 094 010
- US-A1- 2012 230 073
- US-B2- 8 547 035

## Description

### Field of the invention

The invention relates to the field of electrical dimmers. More specifically it relates to the field of pre-regulators adapted for detecting whether an electrical dimmer is connected in 2-wire mode or in 3-wire mode.

### Background of the invention

Some prior art dimmers can be connected in 2-wire mode as well as in 3-wire mode. In 2-wire mode, these dimmers are operated without neutral lead, and in 3-wire mode these dimmers are operated with neutral lead.

In 3-wire mode, the neutral lead is connected with the AC to DC converter of the dimmer (the DC power supply). This DC power supply is present for powering the electronics of the dimmer. In 3-wire mode, an extra current path is thus present for charging the DC-power supply in the dimmer as a consequence of the connection with the neutral lead.

In 2-wire mode the neutral lead is not connected to the dimmer. Therefore, no extra current path is present for charging the DC-power supply of the dimmer. Thus, the current required for charging the DC-power supply also goes through the load (e.g. the LED light) connected to the dimmer. In case the load is a conventional light bulb the power required for the dimmer itself does not induce a current causing the light bulb to glow. However, in case the load is a LED, the LED may start to glow just by the current required to power the dimmer. Therefore the current consumed by the DC-power supply must be controlled, especially when the dimmer is connected in 2-wire mode.

An example of a dimmer switch for controlling the amount of power delivered from a power source to a lighting load is given in US20080094010. This dimmer switch comprises a control circuit having a three wire mode of operation wherein the dimmer switch operates with a neutral wire connection, and a two wire mode of operation wherein the dimmer switch operates without a neutral wire connection.

An example of a switched current system which obtains its operating power from the switched current system itself is elaborated in US5736795. It relates to a solid-state power switching circuit for alternating current loads, in which operating power for the circuit is diverted from the switched current during power stealing intervals self-synchronized with the alternating current waveform. The circuit comprises a power storage device which supplies operating power for the circuit and a current limiter to limit the current furnished to the power storage device during periods in which no power to the load is commanded.

US20120230073 relates to a load control device, such as a dimmer switch, for controlling the amount of power delivered from an AC power source to an electrical load. In US20120230073 a two-wire load control device is discussed.

US2011193490 relates to a dimmer which is operable when connected to either two or three active electrical wires. It therefore comprises a power supply topology that operates in 3-wire configuration when a direct connection to AC line neutral is made and operates in 2-wire configuration if this connection is not made.

In view of the research efforts for dimmers which are operable in 2-wire as well as in 3-wire mode, there is a need for dimmers which can autonomously detect whether they are connected in 2-wire mode or in 3-wire mode.

Moreover, because of the operational difference between a dimmer connected in 2-wire mode and a dimmer connected in 3-wire mode it is important to detect in which mode the dimmer is connected. Preferably this is done internally in the dimmer itself.

### Summary of the invention

It is an object of embodiments of the present invention to provide good pre-regulators and dimmers which are able to detect whether a dimmer is connected in 2-wire mode or in 3-wire mode.

The above objective is accomplished by a method and device according to the present invention.

In a first aspect, embodiments of the present invention relate to a pre-regulator adapted for detecting whether a dimmer, comprising the pre-regulator, a switch unit and a DC power supply, are connected with an AC-voltage source in 2-wire mode or in 3-wire mode. The pre-regulator comprises an adjustable resistor and a sensor, the sensor and the adjustable resistor are adapted to be connected in series between the switch unit and the DC power supply by means of a switch terminal and a DC terminal, and the sensor is adapted for sensing the current between the switch terminal and the DC terminal. The pre-regulator is adapted for controlling the resistance of the adjustable resistor based on the sensed current. The pre-regulator furthermore comprises a microcontroller adapted for obtaining a signal which is indicative for the current through the sensor and the microcontroller is adapted for determining, based on the obtained signal, whether the dimmer is connected in 2-wire or in 3-wire mode when the AC voltage source is connected to the dimmer.

It is an advantage of embodiments of the present invention that the pre-regulator can determine whether the dimmer, which is comprising the pre-regulator, is connected in 2-wire or 3-wire mode and that by the same pre-regulator the current through the adjustable resistor can be controlled (by controlling the resistance of the adjustable resistor). In embodiments of the present invention, detecting whether the dimmer is in 2-wire or in 3-wire mode is done by obtaining and analysing a signal which is indicative for the current through the adjustable resistor. This current is smaller when the dimmer is connected in 3-wire mode because in that case the DC power supply is charged via the neutral wire. In embodiments of the present invention this current is substantially zero when the dimmer is connected in 3-wire mode. In embodiments of the present invention, detecting whether the dimmer is in 2-wire or in 3-wire mode is done by obtaining the sensed current and by correlating it with the voltage over the DC power supply. This can for example be the voltage measured at the DC terminal.

In embodiments of the present invention, the microcontroller is adapted for obtaining the sensed current from the sensor and/or the voltage over the DC power supply and/or the output voltage of the DC power supply and the microcontroller is adapted for determining, based on the sensed current and/or based on the voltage over the DC power supply and/or based on the output voltage of the DC power supply, whether the dimmer is connected in 2-wire or in 3-wire mode when the AC voltage source is connected to the dimmer.

In embodiments of the present invention, the microcontroller is adapted for controlling the resistance of the adjustable resistor.

It is an advantage of embodiments of the present invention that the microcontroller can control the adjustable resistor and thus control that part of the current that goes to the DC power supply via the adjustable resistor. An advantage thereof is that the microcontroller can detect whether the dimmer is connected in 2-wire or in 3-wire mode by modifying the resistance of the adjustable resistor and by evaluating the effect on the voltage over the DC power supply. The microcontroller can for example reduce or turn OFF the current through the adjustable resistor. If in that case the voltage over the DC power supply is decreasing this means that the dimmer is connected in 2-wire mode. When in 3-wire mode the DC power supply will be charged via the neutral wire whereas in 2-wire mode the DC power supply can only be charged via the adjustable resistor. It is an advantage of embodiments of the present invention that when the microcontroller has detected that the dimmer is connected in 2-wire mode, the same microcontroller can control the current through the resistance of the adjustable resistor. Thereby it can limit the current through the load connected to the dimmer. Moreover, different input signals can be connected to the microcontroller which can take them into account for controlling the maximum current. Examples of such input signals are current sensing signals, synchronization signals, (over)temperature signals, user input signals.

In embodiments of the present invention, the microcontroller is adapted for controlling the resistance of the adjustable resistor based on the sensed current.

It is an advantage of embodiments of the present invention that a closed loop control over the microcontroller is possible (i.e. the microcontroller controls the current by adjusting the resistor and using as feedback signal the measured current).

In embodiments of the present invention, the sensor comprises a sense resistor.

In embodiments of the present invention, the adjustable resistor comprises a first transistor having a first and a second main electrode and a control electrode, wherein the first main electrode of the first transistor is connected to a first terminal of the sensor and wherein the second main electrode of the first transistor is connected directly or indirectly to the switch terminal.

In embodiments of the present invention, the pre-regulator comprises a second transistor comprising a first and a second main electrode and a control electrode, wherein the first main electrode of the second transistor is connected to the control electrode of the first transistor, the control electrode of the second transistor is connected to the first main electrode of the first transistor, and the second main electrode of the second transistor is connected to a second terminal of the sensor.

In embodiments of the present invention, the pre-regulator comprises at least one gate resistor, wherein the at least one gate resistor is connected directly or indirectly to the switch terminal at one terminal and to the control electrode of the first transistor at the other terminal.

In embodiments of the present invention, the pre-regulator moreover comprises a third transistor having a first and a second main electrode and a control electrode, wherein the first main electrode of the third transistor is connected to the control electrode of the first transistor and wherein the second main electrode of the third transistor is connected to signal ground, and wherein the microcontroller is adapted for controlling the control electrode of the third transistor.

In embodiments of the present invention, the pre-regulator comprises a third transistor having a first and a second main electrode and a control electrode, wherein the first main electrode of the third transistor is connected to the control electrode of the first transistor and wherein the second main electrode of the third transistor is connected to signal ground, and wherein the control electrode of the third transistor is adapted for being controlled by the voltage of the switch terminal.

It is an advantage of embodiments of the present invention that the microcontroller can determine whether the dimmer is connected in 2-wire mode or in 3-wire mode before controlling the resistance of the adjustable resistor. Hence the microcontroller can take into account the connection mode of the dimmer when controlling the resistance of the adjustable resistor.

In embodiments of the present invention, the pre-regulator comprises a memory storage device for storing software code allowing the microprocessor to process incoming data and based thereon to control the control electrode of the third transistor and/or to determine whether the dimmer is connected in 2-wire or in 3-wire mode.

In a second aspect, embodiments of the present invention relate to a dimmer adapted for detecting whether it is connected with an AC-voltage source in 2-wire mode or in 3-wire mode. The dimmer comprises a switch unit, a DC power supply, and a pre-regulator according to any of the previous claims wherein the switch unit is connected with the switch terminal of the pre-regulator and wherein the DC power supply is connected with the DC terminal of the pre-regulator, and wherein the microcontroller is adapted for obtaining a signal which is indicative for the current through the sensor, and for determining, based on the obtained signal, whether the dimmer is connected in 2-wire or in 3-wire mode when the AC voltage source is connected to the switch unit of the dimmer.

It is an advantage of embodiments of the present invention that detecting whether the dimmer is connected in 2-wire mode or in 3-wire mode is done by the pre-regulator which can also control the resistance of the adjustable resistor. Thus a more compact dimmer can be realised than in case both functionalities would be implemented by different components. Controlling the resistance of the adjustable resistor is especially useful when the dimmer is connected in 2-wire mode.

In embodiments of the present invention, the DC power supply is a switched mode power supply.

It is an advantage of dimmers according to embodiments of the present invention that an efficient AC-DC power conversion is possible while the current towards the DC power supply can be controlled.

In embodiments of the present invention, the microcontroller is adapted for controlling the switch unit and/or the pre-regulator.

It is an advantage of embodiments of the present invention that at least parts of the dimmer can be controlled using a microcontroller. This makes It possible to adjust the maximum allowed current to the DC power supply depending on the load types and depending on the dimmer configuration (2-wire or 3-wire). It is an advantage of embodiments of the present invention that control of the switch unit and control of the pre-regulator can be done by the same microcontroller.

Particular and preferred aspects of the invention are set out in the accompanying independent and dependent claims.

These and other aspects of the invention will be apparent from and elucidated with reference to the embodiment(s) described hereinafter.

### Brief description of the drawings

FIG. 1 shows a schematic overview of a dimmer and a pre-regulator in accordance with embodiments of the present invention.
FIG. 2 shows a schematic overview of a dimmer and a pre-regulator in accordance with embodiments of the present invention. The pre-regulator is shown in more detail than in FIG. 1.
FIG. 3 shows a detailed electrical scheme of a dimmer in accordance with embodiments of the present invention.
FIG. 4 shows a detailed electrical scheme of a pre-regulator in accordance with embodiments of the present invention.
FIG. 5 shows a detailed electrical scheme of a switch unit of a dimmer in accordance with embodiments of the present invention.
FIG. 6 shows a detailed electrical scheme of a DC power supply of a dimmer in accordance with embodiments of the present invention.
FIG. 7 shows a detailed electrical scheme of a pre-regulator connected with a DC power supply, in accordance with embodiments of the present invention.
FIG. 8 shows a timing diagram of the voltage over the switch terminal and of the current through the pre-regulator of a dimmer in accordance with embodiments of the present invention.
FIG. 9 shows a detailed electrical scheme of a DC power supply of a dimmer in accordance with embodiments of the present invention.

In the different drawings, the same reference signs refer to the same or analogous elements.
Any reference signs in the claims shall not be construed as limiting the scope.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a pre-regulator adapted for detecting whether a dimmer is connected with an AC-voltage source in 2-wire mode or in 3-wire mode. The dimmer comprises the pre-regulator, a switch unit and a DC power supply. In a second aspect the present invention relates to a dimmer comprising such a pre-regulator.

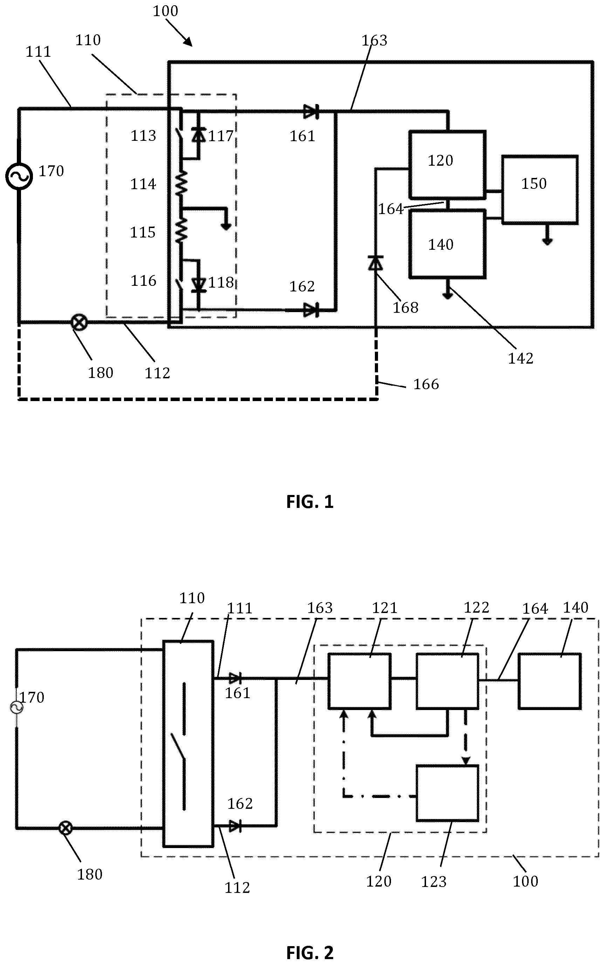

FIG. 1 gives a schematic overview of a dimmer 100 comprising a pre-regulator 120 in accordance with embodiments of the present invention. The dimmer 100 comprises a switch unit 110, a pre-regulator 120 in accordance with embodiments of the present invention, a power supply 140, and dimmer electronics 150. A first terminal 111 (the line terminal) of the switch unit 110 is connected to the anode of a first diode 161 and a second terminal 112 (the switched line terminal) of the switch unit 110 is connected to the anode of a second diode 162. The cathodes of both diodes 161, 162 are connected together to a switch terminal 163 of the pre-regulator 120 which is connected with its DC terminal 164 to a first terminal of the power supply 140. The power supply is connected with a second terminal 142 to the signal ground. Both the pre-regulator 120 and the power supply 140 may be controllable using dimmer electronics 150. Dimmer electronics 150 may embed a microcontroller. The microcontroller may be used for several functions such as error handling (e.g. overload), synchronization handling with the mains. The dimmer electronics may also comprise other components like resistors, op amps, diodes, circuits for conditioning the measured signals. The voltage across first resistor 114 may for example be an input for the microcontroller and has to be dimensioned to make sure the correct trigger is made for an overcurrent. Also the voltage at switch terminal 163 may be measured to provide information to the microcontroller concerning the synchronization. In embodiments of the present invention the dimmer electronics 150 comprises circuitry to insure the basic good working of the dimmer (such as circuits for error (temperature, current, voltage) detection/handling, and synchronization detection). In embodiments of the present invention, the microcontroller may be embedded in the dimmer electronics or a separate microcontroller may be used to control the pre-regulator.

Dimmers according to embodiments of the present invention comprise a line terminal (first terminal 111), a switched line terminal (second terminal 112), and a neutral terminal. Where in embodiments of the present invention reference is made to a dimmer connected in 2-wire mode the neutral terminal is not connected. Where in embodiments of the present invention reference is made to a dimmer connected in 3-wire mode the neutral terminal is connected to a neutral wire.

In both modes the AC voltage source 170 and the load 180 are connected in series between the line terminal 111 and the switched line terminal 112 of the dimmer 100. In 3-wire mode, moreover, the interconnection between the AC voltage source 170 and the load 180 is connected with the neutral terminal 166 of the dimmer 100. In 3-wire mode the dimmer's own power will not flow through the load anymore but through a direct path: line terminal - dimmer - neutral terminal.

In embodiments of the present invention the AC voltage source 170 (e.g. 90VAC-253VAC) has a line terminal and a neutral terminal.

In 2-wire mode the line terminal of the AC voltage source 170 may for example be connected to the line terminal 111 of the dimmer and the switched line terminal 112 of the dimmer may be connected to the load 180 and from the load a connection may be made to the neutral terminal of the AC voltage source.

In another configuration the line terminal of the AC voltage source may be connected to the load 180, the load 180 may be connected to switched line terminal 112 of the dimmer, and the neutral terminal of the AC voltage source may be connected to the line terminal 111 of the dimmer.

Also in 3-wire mode there may be a similar switch between the line terminal and the neutral terminal of the AC voltage source. In both cases the interconnection between the AC voltage source 170 and the load 180 is connected with the neutral terminal 166 of the dimmer 100. In one configuration the AC voltage source is connected with its line terminal to the line terminal 111 of the dimmer and with its neutral terminal to the load. In another possible configuration the AC voltage source is connected with its neutral terminal to the line terminal 111 of the dimmer and with its line terminal to the load. In these examples the load is connected to the switched line terminal 112 of the dimmer.

In the previous examples the AC-voltage source and the load are connected in series between the line terminal and the switched line terminal of the dimmer with the AC-voltage source connected with the line terminal of the dimmer and the load connected with the switched line terminal of the dimmer. In other exemplary embodiments of the present invention the AC-voltage source and the load are connected in series between the line terminal and the switched line terminal of the dimmer with the AC-voltage source connected with the switched line terminal of the dimmer and the load connected with the line terminal of the dimmer. In 3-wire mode the latter configuration is less preferable because in this configuration the power required for powering the dimmer will result in a current through the load which is not the purpose in a 3-wire configuration.

In a 2-wire configuration the current for charging the DC power supply always goes through the load 180. It is therefore important to control this current so as to avoid that the charging current is causing unwanted activation, e.g. lighting, of the load 180. In case the dimmer is connected in 3-wire mode the current for charging the DC power supply will flow via the neutral wire. Therefore the current which is flowing through the load 180 for charging the DC power supply will be strongly reduced compared to the 2-wire configuration. In embodiments of the present invention, the current thought the load will even be substantially zero in the 3-wire mode. In 3-wire mode, the control of the current through the DC power supply is therefore less stringent that in 2-wire mode. It is therefore an advantage of embodiments of the present invention that a pre-regulator, in accordance with embodiments of the present invention, can detect whether the dimmer is connected in 2-wire or in 3-wire mode.

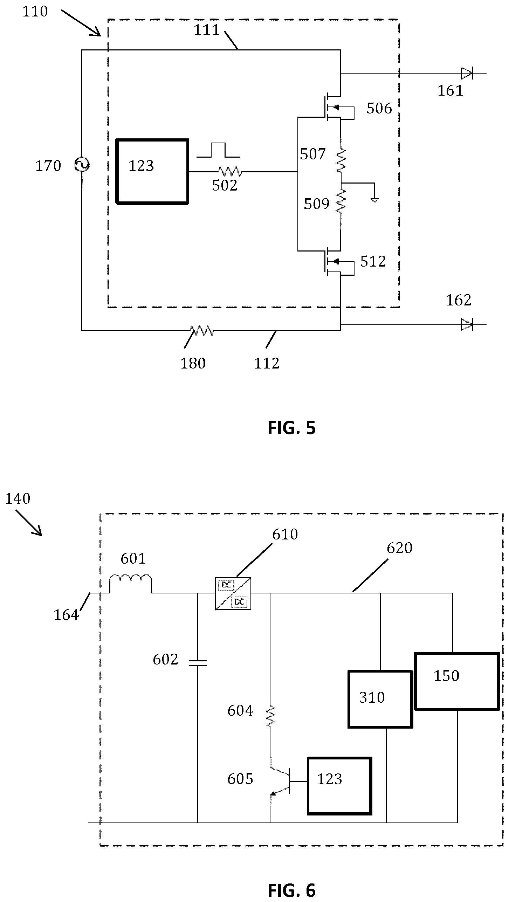

To fulfil this requirement, the pre-regulator 120 comprises an adjustable resistor, a sensor 122 and a microcontroller 123. The adjustable resistor 121 and the sensor 122 are adapted to be connected in series between the switch unit 110 and the DC power supply 140 of the dimmer 100. The connection between the pre-regulator 120 and the switch unit 110 is made at the switch terminal 163. The connection between the pre-regulator 120 and the DC power supply 140 is made at the DC terminal 164. The microcontroller 123 is adapted for obtaining the sensed current from the sensor 122 and/or for obtaining the voltage over the DC power supply 140. Where in embodiments of the present invention reference is made to "the voltage over the DC power supply", reference is made to any voltage which gives an indication of the charge stored in the DC power supply. This voltage can for example be the voltage measured at the DC terminal 164. In embodiments of the present invention the output voltage 620 of the DC power supply 140 is measured. This may for example be done by using an undervoltage detection circuit 310. This is a standard circuit in a dimmer. In embodiments of the present invention, this undervoltage detection circuit 310 is used in combination with switching an extra load at the output of the DC power supply as will be explained below when explaining FIG. 6. The microcontroller 123 is adapted for determining, based on the obtained values, whether the dimmer is connected in 2-wire or in 3-wire mode.

In embodiments of the present invention the microcontroller 123 is adapted for controlling the resistance of the adjustable resistor 121 based on the sensed current. It is an advantage of embodiments of the present invention that the microcontroller 123 can take into account the detected connection mode of the dimmer (2-wire or 3-wire mode) when controlling the resistance of the adjustable resistor 121.

In the example illustrated in FIG. 1, the switch unit 110 is formed by a series connection, between the first terminal 111 and the second terminal 112, of a first switch 113, a first sense element, e.g. a first resistor 114, a second sense element, e.g. a second resistor 115, and a second switch 116. A third diode 117 is connected in parallel over the first switch 113, with its anode to the interconnection of the first switch 113 and the first resistor 114 and with its cathode to the first terminal 111. A fourth diode 118 is connected in parallel over the second switch 116, with its anode to the interconnection of the second switch 116 and the second resistor 115 and with its cathode to the second terminal 112. The connection between the first and second sense elements, e.g. the first and second resistors 114, 115 is connected to the signal ground. The third diode 117 may be integrated in the first switch 113. This may for example be the case when using MOSFETs. Also the fourth diode 118 may be integrated in the second switch 116.

The switch unit 110 is connected in series with a load 180, and changes the supply voltage waveform applied to the load from the pure AC waveform applied by the voltage source 170 to a leading edge (forward phase) or a trailing edge (reverse phase) AC voltage waveform, or is capable of switching between both waveforms. The output waveform of the
switch unit 110 is applied to one or more loads 180 (only one being illustrated in FIG. 1). The conduction angle of the voltage waveform may be adjustable.

In the example of FIG. 1 a series connection is made between the first terminal 111, the AC voltage source 170, the load 180 and the second terminal 112. The first terminal 111 is the line, the second terminal 112 is the switched line, and the connection between the AC voltage source and the load is the neutral.

The dimmer illustrated in FIG. 1 is a phase cut dimmer. Such a dimmer either cuts the AC voltage (the mains voltage) immediately after the zero crossing of the mains (leading edge) or towards the next projected zero crossing of the mains (trailing edge). Leading edge and trailing edge functionality may be implemented in one device. Such a dimmer is a universal dimmer.

In the example of FIG. 1 the pre-regulator 120 may be connected with the neutral 166 through diode 168 (in the 3-wire configuration), or it may be not connected with the neutral 166 (in the 2-wire configuration).

FIG. 2 shows a schematic overview of a dimmer 100 in accordance with embodiments of the present invention. This example is similar as the example of FIG. 1. It shows a simplified scheme of the switch unit 110 and the pre-regulator 120 is shown in more detail. Also in this example the first terminal 111 of the switch unit 110 is connected to the anode of a first diode 161 and a second terminal 112 of the switch unit 110 is connected to the anode of a second diode 162. The cathodes of both diodes 161, 162 are connected together to the switch terminal 163 of the pre-regulator 120 which is connected with its DC terminal 164 to the power supply 140. The power supply is connected with the second terminal to the signal ground.

In the embodiment illustrated in this figure, the pre-regulator 120 comprises an adjustable resistor 121, a sensor 122 and optionally a microcontroller 123. The adjustable resistor 121 is connected with the switch terminal 163 to the cathode of the first diode 161 and the second diode 162, and with its other terminal to the sensor 122. The sensor 122 on its turn is connected with the DC terminal 164 to the power supply 140. The sensor 122 is adapted for sensing the current between the switch terminal 163 and the DC terminal 164. Sensing of the current can be done directly or indirectly. Indirect sensing of the current can for example be by measuring the voltage over a resistance. In this embodiment the microcontroller 123 is adapted for obtaining the current sensed by the sensor 122 and/or for obtaining the voltage at the DC terminal 164. Based thereon, e.g. on a series of such measurements, the microcontroller 123 can determine whether the dimmer 100 is connected in 2-wire or in 3-wire mode. In embodiments of the present invention the microcontroller 123 is also connected with the adjustable resistor 121 for controlling the resistance value of the adjustable resistor. For controlling the resistance value of the adjustable resistor 121 the microcontroller 123 may base itself on the current sensed by the sensor 122.

In embodiments of the present invention the adjustable resistor 121 can be controlled solely by direct feedback from the sensor 122 (combination 1). In another embodiment, this control may be complemented with control by a microcontroller 123 (combination 2). In yet another embodiment the feedback from the sensor 122 to the adjustable resistor 121 may be solely done through the microcontroller 123 (combination 3). In yet another embodiment the microcontroller feedback of the sensed current and the direct feedback of the sensed current may be combined (combination 4).

When using combination 2 it is possible to adapt the dimmer for new types of loads (e.g. a new LED bulb with different characteristics). Via direct feedback it may be possible to implement the current limit provided by the guideline "IEC/TR 63036 Ed.1". This guideline specifies the interface for a phase-cut dimmer in phase cut dimmed lighting systems This guideline is not obligated so Led manufacturers may not follow it and may decrease the allowable current flowing through their bulb as this is more cost efficient for them. It is an advantage of embodiments of the present invention that via the microcontroller it is possible to adapt the current limit to achieve optimal dimming.

In embodiments of the present invention the microcontroller 123 may use different signals of the dimmer such as current sensing signals, synchronisation signals, and/or (over)temperature signals as inputs, based on which the microcontroller 123 controls the resistance of the adjustable resistance. When the dimmer for example detects that its synchronization fails, the dimmer may provide an error (e.g. blinking red LED). Additionally, in embodiments of the present invention, the dimmer may try to recover the synchronization by increasing the value of the adjustable resistor 121 so that the dimmer gets a higher impedance and thus the synchronization signal may be improved. In embodiments of the present invention the common dimmer signals may be used as input to control the resistance of the pre-regulator.

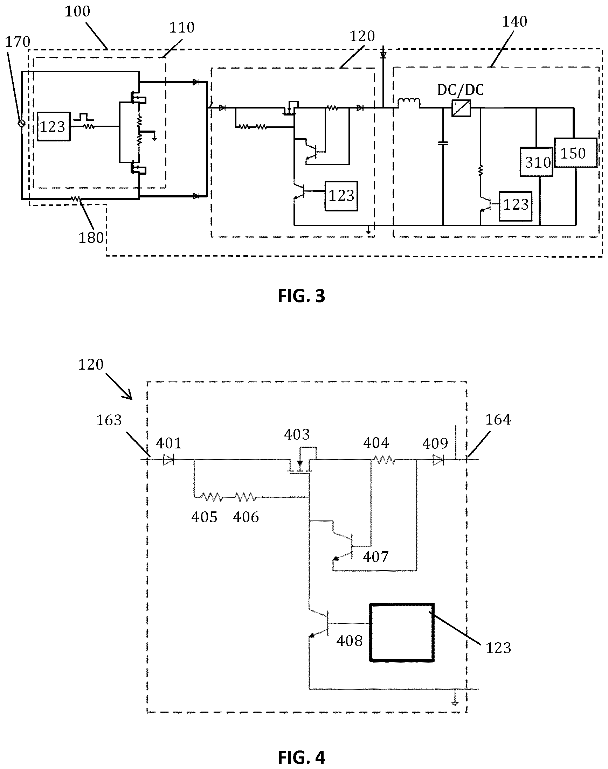

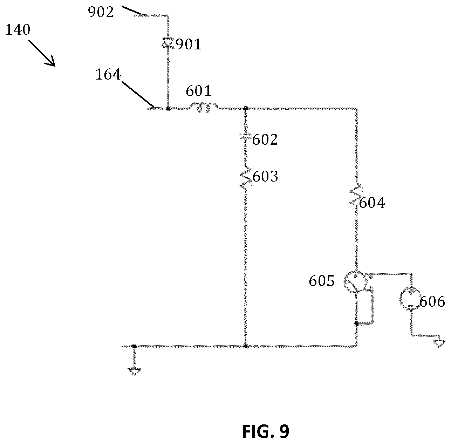

FIG. 3 shows a detailed scheme of a dimmer 100 in accordance with embodiments of the present invention. In this figure the dimmer 100 is connected in series with an AC voltage source 170 and a load 180. The load 180 can for example be a lamp, such as a LED lamp. The dimmer 100 comprises a switch unit 110 connected with a pre-regulator 120 connected with a DC power supply 140. In this example the dimmer 100 is connected in 2-wire mode. A connection in 3-wire mode is, however, also possible as will be illustrated in FIG. 9. The different subcomponents are explained in the following paragraphs. FIG. 4 shows the same pre-regulator 120, FIG. 5 shows the switch unit 110 and FIG. 6 shows the DC power supply 140.

The pre-regulator 120 illustrated in FIG. 4 has the following configuration. A disconnector element 401 is provided at the entrance of the pre-regulator, coupled to the switch terminal 163. In the embodiment illustrated, this disconnector element is implemented by means of a fifth diode 401. The anode of the fifth diode 401 is connected with the cathode of the first diode 161 (at the switch terminal 163). The cathode of the fifth diode 401 may also be connected with the resistors for the voltage synchronisation circuit. The fifth diode 401 thereby ensures that the voltage synchronization signal is not influenced by the voltage on the high voltage capacitor of the DC power supply. This fifth diode 401 can be a Schottky diode. One electrode of the disconnector element, e.g. the cathode of the fifth diode 401, may be connected, over a sense element (the sense element is however not necessary and is not shown in the figure), with a terminal of a variable resistor. The sense element may for example be a sense resistor. The terminal of the variable resistor may for example be the drain of a first transistor 403. In this example the first transistor 403 is a MOSFET, however, this is not strictly necessary, a transistor in general is sufficient. The transistor may for example be a (high voltage) transistor. In general the variable resistor may be any variable resistor which may be controllable via a voltage or current signal or a protocol like I²C. The variable resistor may be an electronic adjustable potentiometer suitable for the mains voltage range. This voltage range may be between 100 and 360 V or even between 50 and 160V. A gate resistor is provided between the gate of the first transistor 403 and the disconnector element, e.g. fifth diode 401. In the example illustrated in FIG. 4, the gate resistor is implemented as a series connection of a first gate resistor 405 and a second gate resistor 406. Using two resistors in series is advantageous with regard to the max voltage across the resistors. For a standard SMD resistor, e.g. for a 1206 size resistor this is 200V so to withstand mains, 2 of them are required. This could also be achieved using a high voltage or PTH resistor but this is less favourable for the PCB lay-out and has a higher cost. When using a bipolar transistor the first and second gate resistors 405 and 406 are not required. In the exemplary embodiment of FIG. 4 the second gate resistor 406 is connected with the gate of the first transistor 403. The source of the first transistor 403 is connected with a terminal of a sense element, e.g. sense resistor 404, which may be connected with its second terminal to a terminal of a further disconnector element, e.g. the anode of a sixth diode 409. This diode 409 is, however, not strictly required when there is no 2 wire/3 wire detection. The further disconnector element, if implemented as a sixth diode, may be a Schottky diode. The second terminal of the further disconnector element, e.g. the cathode of the sixth diode 409, is electrically connected with the power supply 140 (at the DC terminal 164).

The gate of the first transistor 403 is also electrically connected with a collector of a second transistor 407 and with a collector of a third transistor 408. The base of the second transistor 407 is electrically connected with the source of the first transistor 403. The emitter of the second transistor 407 is connected with a node between the sense element, e.g. sense resistor 404, and the further disconnector element, e.g. the sixth diode. The base of third transistor 408 is, in this example, connected with the microcontroller 123 and the emitter of the third transistor 408 is connected with the signal ground. The second and third transistor 407, 408 may be bipolar transistors. However, this is not strictly required. The second transistor 407 amplifies signal across sense resistor 404. The third transistor 408 may be used as amplifier or as a switch. The transistor so could for example also be used as a relay. This is advantageous when following the "IEC/TR 63036 Ed.1" guideline. According to this guideline, when switching off the power towards the lamp it is required to wait some time to switch on the pre-regulator / power supply again (see fig 5 of this guideline IEC/TR 63036 Ed.1 document 23B/1201/DTR).

In this exemplary embodiment of the present invention the sensor 122 comprises the sense element, e.g. sense resistor 404. The voltage at one or both of the terminals of the sense element, e.g. sense resistor 404, forms the output of the sensor 122. The pre-regulator 120 comprises a microcontroller 123 which is adapted of obtaining the current through the sense element, e.g. sense resistor 404, and/or for obtaining the voltage over the DC power supply 140 and/or the output voltage Vout 620 of the DC power supply 140. The microcontroller 123 is adapted for determining, based on the sensed current and/or based on the voltage over the DC power supply 140, whether the dimmer 100 is connected in 2-wire or in 3-wire mode when the AC voltage source 170 is connected to the dimmer 100.

In case the dimmer 100 is connected in 3-wire mode almost no current will flow through the sense element, e.g. sense resistor 404, when the AC voltage source 170 is turned on. The reason therefore is that the DC power supply 140 is charged via the neutral wire. In this case, the charge current does not flow via the load 180 and hence a relative high charge current does not cause a problem.

In case the dimmer 100 is connected in 2-wire mode, a significant current (compared to the current in the 3-wire mode configuration) will flow through the sense element, e.g. sense resistor 404, and through the load 180 when the AC voltage source 170 is turned on. This current will charge the DC power supply 140. Hence, in this case a relative high charge current might cause a problem. If the load 180 is a LED, this current might for example cause an unwanted illumination of the LED.

The base of third transistor 408 is, in this example, connected with the microcontroller 123 and the emitter of the third transistor 408 is connected with the signal ground. The second transistor 407 amplifies the signal across sense resistor 404. The third transistor 408 may be used as amplifier or as a switch. The transistor could for example also be used as a relay. This is advantageous when following the "IEC/TR 63036 Ed.1" guideline. According to this guideline, when switching off the power towards the lamp it is required to wait some time to switch on the pre-regulator / power supply again (see fig 5 of this guideline IEC/TR 63036 Ed.1 document 23B/1201/DTR).

In embodiments of the present invention the voltage at one or both of the terminals of the sense element, e.g. sense resistor 404, is used as input for the adjustable resistor 121. The adjustable resistor 121, in the embodiment illustrated in FIG. 4, comprises the first transistor 403. The pre-regulator 120 moreover comprises the second transistor 407, the third transistor 408 and the first and second gate resistors 405, 406. Using these components, the current from the AC voltage source 170 to the DC power supply 140 can be controlled. In this example this is the current to the high voltage capacitor 602 (see FIG. 6). The first transistor 403 functions as a variable resistor wherein the resistance is depending on the voltage on the gate of the first transistor 403. The resistance may for example be changed between high-ohmic and low-ohmic depending on the circumstances. The combination of the sense resistor 404 and the second transistor 407 defines the absolute maximum current which can flow towards the high voltage capacitor 602. Thus the maximum current to the high voltage capacitor 602 is limited via hardware and is dependent on the current through the sense resistor 404. The maximum current to the high voltage capacitor 602 may for example be 18mA, or even 36 mA, or even 46 mA. The signal to the gate of the third transistor 408 can be controlled, for instance by means of a microcontroller 123. When using a bipolar transistor 408 and applying approximately 0.6V on the basis (at higher temperature approximately 0.5 V could be sufficient), the current to the high voltage capacitor 602 is completely switched off as the voltage on the gate is nearly 0V and thus no current can flow through the first transistor (mosfet) 403. In the latter case no power can be taken by the DC power supply 140 (the high voltage capacitor 602 cannot be charged). The microcontroller 123 can thus determine when power can be taken by the DC power supply 140 or not. In embodiments of the present invention the microcontroller 123 can be programmed so as to determine the timing at which power can be taken by the DC power supply 140 (e.g. to synchronise a dimmer and the lamps). The microcontroller can therefore use as input the dimmer's synchronization signals. The microcontroller may not only use these signals to switch power on/off to the load but also to switch on/off the power supply. In embodiments of the present invention the microcontroller is programmed such that the pre-regulator has the same current carrying capability as the dimmer. The microcontroller 123 may be programmed beforehand or may be adjustable by the user. Depending on the load another maximum current may be preferable. For example when a high number of lamps is connected to the dimmer a higher maximum current may be allowable. This can for example be controlled by the microcontroller 123.

Using this circuitry according to embodiments of the present invention, the current towards the DC power supply 140 can be controlled. The pre-regulator 120 may comprise a memory storage device (not illustrated) having stored software code allowing the microprocessor 123 to process incoming data and based thereon to control the signal to the base of the third transistor 408.

In embodiments of the present invention the values of the inductor 601 and of the capacitor 602 are related to the implementation of the power supply. The value of the sense resistor 404 depends on the maximum allowed current. The value of the sense resistor 404 may for example be calculated using the following formula: 0.6V/max current. Referring to the standard "IEC/TR 63036 Ed.1 document 23B/1201/DTR" the following values are relevant: 16.7 Ohm for 36 mA, 33.3 Ohm for 18mA. The sense resistor 404 may for example be ranging between 12 and 39 Ohm, preferably 15 Ohm. The values of the sense resistors 405/406 depend on the used first transistor (mosfet) 403. Values in the range of 200kOhm to 1MegaOhm may be suitable.

Not all the components in the pre-regulator 120 of FIG. 2/FIG. 4 are required. A first reduced configuration corresponds with an adjustable resistor 121 in series with a sensor 122 and a microcontroller 123 adapted for obtaining the sensed current from the sensor 122 and/or the voltage at the DC terminal 164. The sensor may be adapted for controlling the adjustable resistor 121 (combination 1). This configuration is also illustrated in FIG. 2. For this reduced set the pre-regulator 120 comprises the microcontroller 123, a gate resistor, for instance the first and second gate resistor 405, 406, the first transistors 403, the second transistor 407, and the sense element, e.g. the sense resistor 404. In this configuration the adjustable resistor 121 comprises the first transistor 403 and the sensor 122 comprises the sense element, e.g. sense resistor 404.

This reduced configuration may be complemented with the third transistor 408 controlled by the microcontroller 123. This resulting configuration corresponds with the configuration in FIG. 2 wherein the microcontroller 123 determines whether the dimmer 100 is connected in a 2-wire or 3-wire configuration and wherein the sensor 122 controls the adjustable resistor 121 and wherein the microcontroller 123 controls the adjustable resistor 121 (combination 2).

In yet another configuration, corresponding with combination 3 illustrated in FIG. 2, the adjustable resistor 121 is controlled with the microcontroller 123 which has its input from the sensor 122. This input may be the voltage levels at the first end and the second end of the first sense resistor 404. It is thereby an advantage of embodiments of the present invention that the microcontroller 123 can adjust its control of the adjustable resistor 121 depending on whether the dimmer 100 is connected in 2-wire or in 3-wire mode. In this embodiment of the present invention the pre-regulator 120 comprises the sense element, e.g. sense resistor 404, the gate resistor, for instance first and second gate resistor 405, 406, the first transistor 403, the third transistor 408, and the microcontroller 123. The adjustable resistor 121 comprises the first transistor 403 and the sensor 122 comprises the sense element, e.g. sense resistor 404. In embodiments of the present invention the voltages at the first and second terminal of the sense element, e.g. sense resistor 404, are conditioned for the microcontroller 123.

In this embodiment of the present invention the pre-regulator 120 comprises the sense element, e.g. sense resistor 404, the gate resistor, for instance first and second gate resistor 405, 406, the first transistor 403, the third transistor 408, and the microcontroller 123. The adjustable resistor 121 comprises the first transistor 403 and the sensor 122 comprises the sense element, e.g. sense resistor 404. In embodiments of the present invention the voltages at the first and second terminal of the sense element, e.g. sense resistor 404, are conditioned for the microcontroller 123.

FIG. 5 shows a detailed electrical scheme of a possible implementation of a switch unit 110 for which the current through the switch terminal 163 can be controlled using a pre-regulator 120 in accordance with embodiments of the present invention. The switch unit 110 comprises a first switch and a second switch. In this example the first switch 113 comprises a first transistor 506 and the second switch 116 comprises a second transistor 512. The signals to the gates of these transistors are controlled by a microcontroller 123 in series with a resistor 502.

The drain of the first transistor is connected with the first terminal 111, and the source of the first transistor 506 is connected to the signal ground over a resistor 507. The same resistor 507 is connected to another resistor 509 which is connected to the source of the second transistor 512.

The drain of the second transistor 512 is connected to the second terminal 112.

The drain of the first transistor 506 is connected to the anode of the first diode 505 and the drain of the second transistor 512 is connected to the anode of the second diode 513. The cathodes of the first and second diode 505, 513 can be connected together at the switch terminal 163.

FIG. 6 shows a detailed electrical scheme of a possible implementation of a DC power supply for which the charging current can be controlled using a pre-regulator 120 in accordance with embodiments of the present invention. In the example of FIG. 6 the DC power supply 140 comprises an inductor 601 connected on one side with the DC terminal 164 of the pre-regulator 120. Between the other side of the inductor 601 and the signal ground a parallel connection is present. The parallel connection comprises a high voltage capacitor 602 on one path and a resistor 604, in series with a switch 605 on the other path. The gate of the switch 605 may be controlled by a microcontroller 123. Resistor 604, and transistor 605 are in this example important to check whether dimmer is connected in two-wire or in 3-wire mode. This may be done be switching on transistor 605 so resistor 604 is connected as extra load. At the same time the third transistor 408 is switched on meaning the pre-regulator is switched off. If the voltage at 'Vout' drops and undervoltage detection 310 (Vout compared to pre-defined value) is activated after for example 10 ms this means the dimmer is connected in 2-wire mode, if the voltage Vout does not drop this means the dimmer is connected in 3-wire mode. When the dimmer is connected in 3-wire mode, the transistor 408 may be controlled such that it continuously stays 'ON' meaning the pre-regulator is continuously switched-off.

It is also possible to sense the voltage at DC terminal 164. Measuring Vout is, however, less complex (e.g. Vout is more stabilized).

In parallel therewith the dimmer electronics 150 is connected. This may for example comprise power for the dimmer electronics, which may comprise opamp current sensing circuitry, and a circuit for synchronisation. In order to lower the voltage on the capacitor 320 a DC/DC conversion block 610 is added. This makes it suitable for powering the microcontroller.

A dimmer according to embodiments of the present invention may also be connected in 3-wire mode. In 3-wire mode the neutral of the dimmer is connected to the neutral wire of the AC voltage source. An example thereof is illustrated in FIG. 9. This shows a similar DC power supply as in FIG. 6. It additionally has a seventh diode 901 which is connected with its cathode to the DC terminal 164 and with its anode to the neutral wire of the AC voltage source. The advantage thereof being that the high voltage capacitor 602 is charged through the seventh diode 902, thus avoiding large currents through the load 180. In this example the switch 605 and the can be controlled by element 606.

In case the dimmer is connected in 3-wire mode almost no current will flow through the fourth sense element, e.g. fourth sense resistor 404, when the AC voltage source 170 is turned on. The reason therefore is that the high voltage capacitor 602 is charged via the neutral wire. In this case the charge current does not flow via the load 180 and thus a relative high charge current does not cause a problem.

In case the dimmer is connected in 2-wire mode a significant current (compared to the current in the 3-wire mode configuration) will flow through the fourth sense element, e.g. fourth sense resistor 404, when the AC voltage source 170 is turned on. This current will be charging the high voltage capacitor 602 of the DC power supply 140.

By controlling the gate of the third transistor 408, the pre-regulator 120 can be switched OFF. No current will flow through the first transistor 403. If the dimmer 100 is connected in 2-wire mode, the high voltage capacitor will not be recharged each cycle of the mains (the AC voltage source 170), and the voltage of the high voltage capacitor 602 will drop. If the voltage of the high voltage capacitor does not drop, this means that the dimmer 100 is connected in 3-wire mode. Thus by controlling the resistance of the adjustable resistor 121 and by measuring the current through the adjustable resistor 121 and/or by obtaining the voltage over the DC power supply 140 and/or the output voltage Vout 620 of the DC power supply 140, the microprocessor 123 can determine if the dimmer 100 is connected in 2-wire or in 3-wire mode.

The voltage at the switch terminal 163 is often used to derive different signals to turn on/off the dimmer switches 113, 116. The disconnector element, e.g. fifth diode 401, (see the example of FIG. 4) is not strictly necessary but it makes sure that the voltage at the switch terminal 163 is not influenced by the voltage across the capacitor of the DC power supply 140 (the high voltage capacitor 602 in the example of FIG. 6). Also the further disconnector, e.g. the sixth diode 409, between the sense element, e.g. sense resistor 404, and the DC terminal 164 makes sure that the voltage at the switch terminal 163 is not influenced by the voltage across the high voltage capacitor 602 of the power supply 140. For this protection one or both of the disconnector elements, e.g. diodes 401, 409, may be present.

In embodiments of the present invention, the first and second gate resistors 405, 406 may be combined into one single resistor instead of two. Due to the high voltage across these resistors it may be cheaper to use two resistors instead of a single resistor.

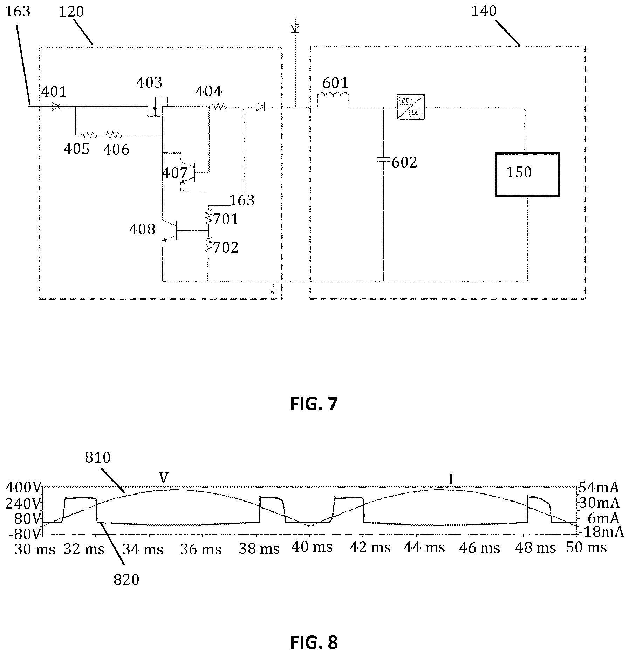

FIG. 7 is an electronic design scheme of a pre-regulator 120 in accordance with embodiments of the present invention. This pre-regulator 120 is similar as the pre-regulator in FIG. 4. It comprises a microcontroller (not shown in this figure) which is adapted to obtain the current through the fourth sense element, e.g. sense resistor 404, and/or the voltage over the DC power supply 140 (e.g. the voltage at the DC terminal 164) and to determine whether a dimmer 100, which is comprising the pre-regulator 120, is connected in 2-wire or in 3-wire mode. In this exemplary embodiment of the present invention the current through the third transistor 403 and/or the sense resistor 404; and/or the voltage over the DC power supply 140; and/or the output voltage Vout 620 of the DC power supply 140 is obtained. The gate of the third transistor 403 is in this pre-regulator 120 not controlled by the microcontroller (not shown in this figure) but by a voltage derived from the voltage at the switch terminal 163. In this case, the switch terminal 163 is connected to signal ground over a series connection of a first resistor 701 and a second resistor 702. The gate of the third transistor 408 is coupled to the node between the first resistor 701 and the second resistor 702. In this case, the time the dimmer can power itself is defined via hardware (and hence is not adjustable during normal operation).

FIG. 8 shows in a timing diagram the voltage at the switch terminal 163 and the current through the fourth sense element, e.g. sense resistor 404, for a pre-regulator 120 according to the electronic design scheme of FIG. 7. As can be seen from the diagram, each start and end of the voltage at the switch terminal 163 the dimmer can draw current. If the load is switched ON via the leading edge, only during the start the dimmer can draw current. If the load is switched ON via the trailing edge only during the end the dimmer can draw current. In embodiments of the present invention a microprocessor is used to pre-define, via the first resistor 701 and the second resistor 702, a window in which the power supply can take power from the mains. In embodiments of the present invention this window is fixed. This is a scheme which can be applied when a dimmer 100 is connected in 2-wire mode.

## Claims

1. A dimmer (100) adapted for detecting whether it is connected with an AC-voltage source (170) in 2-wire mode or in 3-wire mode, the dimmer (100) comprising a switch unit (110), a DC power supply (140) and a pre-regulator (120) which comprises an adjustable resistor (121), a sensor (122), and a microcontroller (123), wherein the switch unit (110) comprises a first terminal (111), and a second terminal (112) for connecting a load (180) and the AC voltage source (170), and the dimmer comprises a neutral terminal (166), wherein in 2-wire mode and in 3-wire mode the AC voltage source (170) and the load (180) are connected in series between the first terminal (111) and the second terminal (112), and in 3-wire mode, moreover, an interconnection between the AC voltage source (170) and the load (180) is connected with the neutral terminal (166) of the dimmer (100), **characterized in that** the sensor (122) and the adjustable resistor (121) are connected in series between the switch unit (110) and the DC power supply (140) wherein the switch unit (110) is connected with a switch terminal (163) of the pre-regulator (120) and the DC power supply (140) is connected with a DC terminal (164) of the pre-regulator (120), wherein the sensor (122) is adapted for sensing a current between the switch terminal (163) and the DC terminal (164), and wherein the sensor (122) and/or the microcontroller (123) of the pre-regulator (120) are adapted for controlling the resistance of the adjustable resistor (121) based on the sensed current, wherein the microcontroller (123) is adapted for obtaining the sensed current from the sensor (122) and/or a voltage over the DC power supply (140) which gives an indication of a charge stored in the DC power supply (140) and wherein the microcontroller is adapted for determining, based on the sensed current and/or based on the voltage over the DC power supply, whether the dimmer (100) is connected in 2-wire or in 3-wire mode when the AC voltage source is connected to the dimmer, whereby in 2-wire mode the DC power supply (140) is charged only via the adjustable resistor (121) and in 3-wire mode charging of the DC power supply is via the neutral terminal (166), such that in the 3-wire mode the sensed current has a much smaller value in comparison to the sensed current in the 2-wire mode.

2. The dimmer (100) according to claim 1, wherein the microcontroller (123) is adapted for controlling the resistance of the adjustable resistor (121).

3. The dimmer (100) according to any of the previous claims, wherein the sensor (122) comprises a sense resistor (404).

4. The dimmer (100) according to any of the previous claims, wherein the adjustable resistor (121) comprises a first transistor (403) having a first and a second main electrode and a control electrode, wherein the first main electrode of the first transistor (403) is connected to a first terminal of the sensor (122) and wherein the second main electrode of the first transistor (403) is connected directly or indirectly to the switch terminal (163).

5. The dimmer (100) according to claim 4, moreover comprising a second transistor (407) comprising a first and a second main electrode and a control electrode, wherein the first main electrode of the second transistor (407) is connected to the control electrode of the first transistor (403), the control electrode of the second transistor (407) is connected to the first main electrode of the first transistor (403), and the second main electrode of the second transistor (407) is connected to a second terminal of the sensor(122).

6. The dimmer (100) according to any of claims 4 or 5, furthermore comprising at least one gate resistor (405, 406), wherein the at least one gate resistor (405, 406) is connected directly or indirectly to the switch terminal (163) at one terminal and to the control electrode of the first transistor (403) at the other terminal.

7. The dimmer (100) according to any of claims 5 to 6, the pre-regulator moreover comprising a third transistor (408) having a first and a second main electrode and a control electrode, wherein the first main electrode of the third transistor (408) is connected to the control electrode of the first transistor (403) and wherein the second main electrode of the third transistor (408) is connected to signal ground, and wherein the microcontroller (123) is adapted for controlling the control electrode of the third transistor (408).

8. The dimmer (100) according to any of claims 5 to 6, the pre-regulator moreover comprising a third transistor (408) having a first and a second main electrode and a control electrode, wherein the first main electrode of the third transistor (408) is connected to the control electrode of the first transistor (403) and wherein the second main electrode of the third transistor (408) is connected to signal ground, and wherein the control electrode of the third transistor (408) is adapted for being controlled by a voltage of the switch terminal (163).

9. The dimmer (100) according to any of the previous claims wherein the DC power supply (140) is a switched mode power supply.

## Patentansprüche

1. Einen dimmer (100), der angepasst ist, um zu erkennen, ob er mit einer Wechselstromspannungsquelle (170) in einem 2-Drahtmodus oder in einem 3-Drahtmodus verbunden ist, wobei der Dimmer (100) eine Schaltereinheit (110), eine Gleichstromenergieversorgung (140) und einen Vorspannungsregler (120), der einen einstellbaren Widerstand (121) umfasst, einen Sensor (122) und einen Mikrocontroller (123) umfasst, wobei die Schaltereinheit (110) einen ersten Anschluss (111) und einen zweiten Anschluss (112) zum Verbinden eines Verbrauchers (180) und der Wechselstromspannungsquelle (170) umfasst und der Dimmer einen neutralen Anschluss (166) umfasst, wobei in dem 2-Drahtmodus und in dem 3-Drahtmodus die Wechselstromspannungsquelle (170) und der Verbraucher (180) zwischen dem ersten Anschluss (111) und dem zweiten Anschluss (112) in Reihe geschaltet sind und wobei in dem 3-Drahtmodus ferner eine Zusammenschaltung zwischen der Wechselstromspannungsquelle (170) und dem Verbraucher (180) mit dem neutralen Anschluss (166) des Dimmers (100) verbunden ist, **dadurch gekennzeichnet, dass** der Sensor (122) und der einstellbare Widerstand (121) zwischen der Schaltereinheit (110) und der Gleichstromenergieversorgung (140) in Reihe geschaltet sind, wobei die Schaltereinheit (110) mit einem Schalteranschluss (163) des Vorspannungsreglers (120) verbunden ist und die Gleichstromenergieversorgung (140) mit einem Gleichstromanschluss (164) des Vorspannungsreglers (120) verbunden ist, wobei der Sensor (122) angepasst ist, um einen Strom zwischen dem Schalteranschluss (163) und dem Gleichstromanschluss (164) zu erfassen und wobei der Sensor (122) und/oder der Mikrocontroller (123) des Vorspannungsreglers (120) angepasst ist, um den Widerstandswert des einstellbaren Widerstands (121) basierend auf dem erfassten Strom zu steuern, wobei der Mikrocontroller (123) angepasst ist, um den erfassten Strom von dem Sensor (122) und/oder eine Spannung über der Gleichstromenergieversorgung (140), die einen Hinweis auf eine in der Gleichstromenergieversorgung (140) gespeicherten Ladung gibt, zu steuern und wobei der Mikrocontroller angepasst ist, um basierend auf dem erfassten Strom und/oder basierend auf der Spannung über der Gleichstromenergieversorgung zu bestimmen, ob der Dimmer (100) in dem 2-Draht- oder in dem 3-Drahtmodus verbunden ist, wenn die Wechselstromspannungsquelle mit dem Dimmer verbunden ist, wodurch in dem 2-Drahtmodus die Gleichstromenergieversorgung (140) nur über den einstellbaren Widerstand (121) geladen wird und in dem 3-Drahtmodus ein Laden der Gleichstromenergieversorgung über den neutralen Anschluss (166) derart abläuft, dass in dem 3-Drahtmodus der erfasst Strom einen weitaus geringeren Wert aufweist als im Vergleich zu dem erfassten Strom in dem 2-Drahtmodus.

2. Dimmer (100) nach Anspruch 1, wobei der Mikrocontroller (123) angepasst ist, um den Widerstandswert des einstellbaren Widerstands (121) zu steuern.

3. Dimmer (100) nach einem der vorhergehenden Ansprüche, wobei der Sensor (122) einen Erfassungswiderstand (404) umfasst.

4. Dimmer (100) nach einem der vorhergehenden Ansprüche, wobei der einstellbare Widerstand (121) einen ersten Transistor (403) umfasst, der eine erste und eine zweite Hauptelektrode und eine Steuerelektrode aufweist, wobei die erste Hauptelektrode des ersten Transistors (403) mit einem ersten Anschluss des Sensors (122) verbunden ist und wobei die zweite Hauptelektrode des ersten Transistors (403) direkt oder indirekt mit dem Schalteranschluss (163) verbunden ist.

5. Dimmer (100) nach Anspruch 4, ferner umfassend einen zweiten Transistor (407), der eine erste und eine zweite Hauptelektrode und eine Steuerelektrode umfasst, wobei die erste Hauptelektrode des zweiten Transistors (407) mit der Steuerelektrode des ersten Transistors (403) verbunden ist, die Steuerelektrode des zweiten Transistors (407) mit der ersten Hauptelektrode des ersten Transistors (403) verbunden ist, und die zweite Hauptelektrode des zweiten Transistors (407) mit einem zweiten Anschluss des Sensors (122) verbunden ist.

6. Dimmer (100) nach einem der Ansprüche 4 oder 5, darüber hinaus umfassend wenigstens einen Gatewiderstand (405, 406), wobei der wenigstens eine Gatewiderstand (405, 406) direkt oder indirekt mit dem Schalteranschluss (163) an einem Anschluss und mit der Steuerelektrode des ersten Transistors (403) an dem anderen Anschluss verbunden ist.

7. Dimmer (100) nach einem der Ansprüche 5 bis 6, wobei der Vorspannungsregler ferner einen dritten Transistor (408) umfasst, der eine erste und eine zweite Hauptelektrode und eine Steuerelektrode aufweist, wobei die erste Hauptelektrode des dritten Transistors (408) mit der Steuerelektrode des ersten Transistors (403) verbunden ist und wobei die zweite Hauptelektrode des dritten Transistors (408) mit der Signalerde verbunden ist und wobei der Mikrocontroller (123) angepasst ist, um die Steuerelektrode des dritten Transistors (408) zu steuern.

8. Dimmer (100) nach einem der Ansprüche 5 bis 6, wobei der Vorspannungsregler ferner einen dritten Transistor (408) umfasst, der eine erste und eine zweite Hauptelektrode und eine Steuerelektrode aufweist, wobei die erste Hauptelektrode des dritten Transistors (408) mit der Steuerelektrode des ersten Transistors (403) verbunden ist und wobei die zweite Hauptelektrode des dritten Transistors (408) mit der Signalerde verbunden ist und wobei die Steuerelektrode des dritten Transistors (408) angepasst ist, um durch eine Spannung des Schalteranschlusses (163) gesteuert zu werden.

9. Dimmer (100) nach einem der vorhergehenden Ansprüche, wobei die Gleichstromenergieversorgung (140) eine Energieversorgung in geschaltetem Modus ist.

## Revendications

1. Un gradateur (100) adapté pour détecter s'il est connecté à une source de tension alternative (170) en mode 2 fils ou en mode 3 fils, le gradateur (100) comprenant une unité de commutation (110), une alimentation en courant continu (140) et un pré-régulateur (120) comprenant une résistance réglable (121), un capteur (122) et un microcontrôleur (123),
l'unité de commutation (110) comprenant une première borne (111) et une seconde borne (112) permettant de connecter une charge (180) et la source de tension alternative (170), et le gradateur comprenant une borne neutre (166), la source de tension alternative (170) et la charge (180) étant connectées en série entre la première borne (111) et la seconde borne (112) en mode 2 fils et en mode 3 fils, et une connexion entre la source de tension alternative (170) et la charge (180) étant en outre relié à la borne neutre (166) du gradateur (100) en mode 3 fils,
**caractérisé en ce que**
le capteur (122) et la résistance réglable (121) sont connectés en série entre l'unité de commutation (110) et l'alimentation en courant continu (140), l'unité de commutation (110) étant connectée à une borne de commutation (163) du pré-régulateur (120) et l'alimentation en courant continu (140) étant connectée à une borne de courant continu (164) du pré-régulateur (120),
le capteur (122) étant conçu pour détecter un courant entre la borne de commutation (163) et la borne de courant continu (164), et
le capteur (122) et/ou le microcontrôleur (123) du pré-régulateur (120) étant conçus pour commander la résistance de la résistance réglable (121) en fonction du courant détecté,
le microcontrôleur (123) étant conçu pour obtenir le courant détecté provenant du capteur (122) et/ou une tension aux bornes de l'alimentation en courant continu (140) qui donne une indication d'une charge stockée dans l'alimentation en courant continu (140), et le microcontrôleur étant conçu pour déterminer, en fonction du courant détecté et/ou en fonction de la tension aux bornes de l'alimentation en courant continu, si le gradateur (100) est connecté en mode 2 fils ou en mode 3 fils lorsque la source de tension alternative est connecté au gradateur, l'alimentation en courant continu en mode 2 fils (140) n'étant ainsi chargée que par l'intermédiaire de la résistance réglable (121) et en mode 3 fils par l'intermédiaire de la borne neutre (166), de telle sorte qu'en mode 3 fils, le courant détecté a une valeur bien inférieure à celle du courant détecté en mode 2 fils.

2. Gradateur (100) selon la revendication 1, dans lequel le microcontrôleur (123) est conçu pour commander la résistance de la résistance réglable (121).

3. Gradateur (100) selon l'une des revendications précédentes, dans lequel le capteur (122) comprend une résistance de détection (404).

4. Gradateur (100) selon l'une des revendications précédentes, dans lequel la résistance ajustable (121) comprend un premier transistor (403) comportant une première et une seconde électrodes principales et une électrode de commande, la première électrode principale du premier transistor (403) étant connectée à une première borne du capteur (122) et la seconde électrode principale du premier transistor (403) étant connectée directement ou indirectement à la borne de commutation (163).

5. Gradateur (100) selon la revendication 4, comprenant en outre un deuxième transistor (407) comprenant une première et une seconde électrodes principales et une électrode de commande, la première électrode principale du deuxième transistor (407) étant connectée à l'électrode de commande du premier transistor (403), l'électrode de commande du deuxième transistor (407) étant connectée à la première électrode principale du premier transistor (403) et la seconde électrode principale du deuxième transistor (407) étant connectée à une seconde borne du capteur (122).

6. Gradateur (100) selon l'une des revendications 4 ou 5, comprenant en outre au moins une résistance de grille (405, 406), l'au moins une résistance de grille (405, 406) étant connectée directement ou indirectement à la borne de commutation (163) au niveau d'une borne et à l'électrode de commande du premier transistor (403) au niveau de l'autre borne.

7. Gradateur (100) selon l'une des revendications 5 à 6, le pré-régulateur comprenant en outre un troisième transistor (408) comportant une première et une seconde électrodes principales et une électrode de commande, la première électrode principale du troisième transistor (408) étant connectée à l'électrode de commande du premier transistor (403), la seconde électrode principale du troisième transistor (408) étant connectée à la masse de signal, et le microcontrôleur (123) étant conçu pour commander l'électrode de commande du troisième transistor (408).

8. Gradateur (100) selon l'une des revendications 5 à 6, le pré-régulateur comprenant en outre un troisième transistor (408) comportant une première et une seconde électrodes principales et une électrode de commande, la première électrode principale du troisième transistor (408) étant connectée à l'électrode de commande du premier transistor (403), la seconde électrode principale du troisième transistor (408) étant connectée à la masse de signal, et l'électrode de commande du troisième transistor (408) étant conçue pour être commandée par une tension de la borne de commutation (163).

9. Gradateur (100) selon l'une des revendications précédentes, dans lequel l'alimentation en courant continu (140) est une alimentation en mode commuté.
